# EUROPEAN PATENT APPLICATION

(11) **EP 4 628 986 A1**
(43) Date of publication of application: **08.10.2025**
(21) Application number: 23898372.0
(22) Date of filing: 01.12.2023
(51) Int. Cl.: G03B 17/12, G03B 7/02

(54) **CAMERA ACTUATOR**

(30) Priority: 01.12.2022 KR 20220165635; 22.11.2023 KR 20230162954
(71) Applicant: LG INNOTEK CO. LTD, Gangseo-gu Seoul 07796 (KR)
(72) Inventor: LEE, Jun Taek, Seoul 07796 (KR); KANG, Sang Gu, Seoul 07796 (KR); YOON, Gun Young, Seoul 07796 (KR)
(74) Representative: M. Zardi & Co S.A.
(86) International application number: PCT/KR2023/019653
(87) International publication number: WO 2024/117849

(57) **Abstract**

A camera actuator according to the present invention comprises: a housing; a first lens assembly, a second lens assembly, and a third lens assembly, which are disposed inside the housing and arranged in an optical axis direction; a drive unit which moves the second lens assembly and the third lens assembly in the optical axis direction; and a plurality of first ball units disposed on the second lens assembly and a plurality of second ball units disposed on the third lens assembly, wherein the second lens assembly includes a second lens group, the third lens assembly includes a third lens group, the plurality of first ball units are arranged along the optical axis direction, the plurality of second ball units are arranged along the optical axis direction, the second lens assembly includes a first partition wall portion disposed between the plurality of first ball units, the plurality of first ball units include a first rolling part and a second rolling part, the first rolling parts overlap the second lens group in a first direction, the second rolling parts do not overlap the second lens group in the first direction, the first direction is perpendicular to the optical axis direction, and the driving distance of the second rolling parts is greater than the driving distance of the first rolling parts.

## Description

### [Technical Field]

The present invention relates to a camera actuator.

### [Background Art]

Cameras are devices which capture photos or videos of subjects and are mounted in portable devices, drones, vehicles, and the like.

Camera devices or camera modules may have an image stabilization (IS) function of correcting or preventing image shaking caused by a user's movement, an auto-focus function of automatically adjusting a gap between an image sensor and a lens to align the focal length of the lens, and a zoom function of increasing or decreasing the magnification of a distant subject using a zoom lens to improve the quality of the images.

However, there was a problem of a lens assembly moving along an optical axis through electrical interaction in a camera module, thereby causing overcurrent and overload in the lens assembly, and friction occurring with a plurality of ball units provided for easy movement, which did not resolve the problems of overcurrent and overload.

Accordingly, a means for solving the above problems occurring during the movement of the lens assembly is required.

### [Disclosure]

### [Technical Problem]

The present invention is an invention devised to solve the above-described problems in the related art, and an object of the present invention is to prevent overcurrent and overload during movement of a lens assembly.

The problems to be solved by the present invention are not limited to the problems described above, and other problems which are not described herein will be clearly understood by those skilled in the art from the description below.

### [Technical Solution]

A camera actuator according to an embodiment of the present invention for achieving the above-described purpose includes: a housing; a first lens assembly, a second lens assembly, and a third lens assembly that are disposed inside the housing and arranged in an optical axis direction; a driving unit configured to move the second lens assembly and the third lens assembly in the optical axis direction; and a plurality of first ball units disposed on the second lens assembly and a plurality of second ball units disposed on the third lens assembly, wherein the second lens assembly includes a second lens group, the third lens assembly includes a third lens group, the plurality of first ball units are disposed in the optical axis direction, the plurality of second ball units are disposed in the optical axis direction, the second lens assembly has a first partition wall portion disposed between the plurality of first ball units, the plurality of first ball units include a first rolling portion and a second rolling portion, the first rolling portion overlaps the second lens group in a first direction, the second rolling portion does not overlap the second lens group in the first direction, the first direction is perpendicular to the optical axis direction, and a driving distance of the second rolling portion is greater than a driving distance of the first rolling portion.

Here, the driving unit may include a first driving portion and a second driving portion, and the second lens assembly and the third lens assembly may be disposed between the first driving portion and the second driving portion.

In this case, the first driving portion may include a first magnet disposed on the second lens assembly and a first coil facing the first magnet in the first direction, and the second driving portion may include a second magnet disposed on the third lens assembly and a second coil facing the second magnet in the first direction.

Furthermore, any one of the plurality of first ball units may be spaced apart to overlap in a second direction with the first magnet disposed therebetween, and the second direction may be a direction perpendicular to the optical axis direction and the first direction.

Here, any one of the plurality of second ball units may be spaced apart to overlap in the second direction with the second magnet disposed therebetween, and the second direction may be a direction perpendicular to the optical axis direction and the first direction.

In this case, the second ball unit may include a third rolling portion and a fourth rolling portion spaced apart in the optical axis direction, and the fourth rolling portion may overlap the third lens group in the first direction.

Meanwhile, the third lens assembly may have a second partition wall portion disposed between the plurality of second ball units, and any one of the plurality of second ball units may overlap the third lens group in the first direction.

Here, the second lens assembly may include a second barrel portion surrounding the second lens group and a second extension portion extending in the first direction from the second barrel portion, and the third lens assembly may include a third barrel portion surrounding the third lens group and a third extension portion extending in the first direction from the third barrel portion.

In this case, the second extension portion may extend away from the first lens assembly in the optical axis direction, and the third extension portion may extend to approach the first lens assembly in the optical axis direction.

In addition, the second extension portion may include a first rail groove, and the first rail groove may be divided into a plurality of compartment spaces in the optical axis direction by the first partition wall portion.

Furthermore, the compartment spaces may be divided into as at least two first spaces in which the first ball unit is disposed and a second space in which the first ball unit is not disposed, and the plurality of first spaces may have different lengths in the optical axis direction.

In addition, the third extension portion may include a second rail groove, and the second rail groove may be divided into a plurality of compartment spaces in the optical axis direction by the second partition wall portion.

Here, the compartment spaces may be divided into at least two third spaces in which the second ball unit is disposed and a fourth space in which the second ball unit is not disposed, and the plurality of third spaces may have different lengths in the optical axis direction.

Furthermore, at least one of the compartment spaces may have a length in the optical axis direction that is different from the others.

Meanwhile, a camera actuator according to an embodiment of the present invention includes: a housing; a first lens assembly, a second lens assembly, and a third lens assembly that are disposed inside the housing and arranged in an optical axis direction; a driving unit configured to move the second lens assembly and the third lens assembly in the optical axis direction; and a plurality of first ball units disposed on the second lens assembly and a plurality of second ball units disposed on the third lens assembly, wherein the second lens assembly includes a first recess and a second recess spaced apart in the optical axis direction, the plurality of first ball units are disposed in both the first recess and the second recess, and a length of the second recess in the optical axis direction is greater than a length of the first recess in the optical axis direction.

### [Advantageous Effects]

A camera actuator according to embodiments of the present invention for solving the above problem can have the effect of preventing overcurrent and overload during the movement of a lens assembly.

At this time, since a control unit is provided in a space formed due to a length difference, heat generated by the control unit can be efficiently radiated, and the camera actuator can be miniaturized.

The effects of the present invention are not limited to the effects described above, and other effects which are not described will be clearly understood by those skilled in the art from the description of the claims.

In addition, the effects of the present invention may be described in more detail in the detailed description of the present invention and may not necessarily be limited to the description presented above.

### [Description of Drawings]

The detailed description of preferred embodiments of the present application described below and the summary described above will be better understood when they are read with reference to the attached drawings.

For the purpose of illustrating the present invention, preferred embodiments thereof are shown in the drawings.

However, it should be understood that the present application is not limited to the exact arrangements and means shown.
FIG. 1 is a view for a general description of a camera actuator according to one embodiment of the present invention.
FIG. 2 is an exploded view showing a camera module of the camera actuator according to one embodiment of the present invention.
FIG. 3 is a cross-sectional view along line AA' of the camera module of the camera actuator according to one embodiment of the present invention.
FIG. 4 is a view for describing the overall configuration of the camera actuator according to one embodiment of the present invention.
FIG. 5 is a view for describing the disposition of the camera actuator according to one embodiment of the present invention.
FIG. 6 is a view for describing a second lens assembly of the camera actuator according to one embodiment of the present invention.
FIG. 7 is a view for describing a first partition wall portion of the camera actuator according to one embodiment of the present invention.
FIG. 8 is a view for describing a third lens assembly of the camera actuator according to one embodiment of the present invention.
FIG. 9 is a view for describing a second partition wall portion of the camera actuator according to one embodiment of the present invention.
FIG. 10 is a view for describing movement of the second lens assembly of the camera actuator according to one embodiment of the present invention.
FIG. 11 is a view for describing movement of the third lens assembly of the camera actuator according to one embodiment of the present invention.

### [Modes of the Invention]

Since the present invention may have various modifications and embodiments, specific embodiments are illustrated in the drawings and described. Here, this is not intended to limit the present invention to specific embodiments, and it should be understood to include all modifications, equivalents, or substitutes included in the spirit and technical scope of the present invention.

Although terms that include ordinal numbers such as second and first may be used for describing various constituent elements, the constituent elements are not limited by these terms. These terms are used only for distinguishing one constituent element from another. For example, without departing from the scope of the present invention, a second constituent element could be named a first constituent element, and similarly, the first constituent element could also be named the second constituent element. The term and/or includes any combination of a plurality of related described items or any item among the plurality of related described items.

When it is said that a constituent element is "connected" or "coupled" to another constituent element, although it should be understood that it may be directly connected or coupled to that other constituent element, another constituent element may also be present therebetween. On the other hand, when it is said that any constituent element is "directly connected" or "directly coupled" to another constituent element, it should be understood that another constituent element is not present therebetween.

The terminology used in the present application is used only for describing specific embodiments and is not intended to limit the present invention. Singular expressions include plural expressions unless the context clearly indicates otherwise. In the present application, it should be understood that terms such as terms "include" or "have" are intended to specify the presence of a feature, a number, a step, an operation, a constituent element, a part or a combination thereof described in the specification, but do not exclude in advance the possibility of the presence or the addition of one or more of other features, numbers, steps, operations, constituent elements, parts or combinations thereof.

Unless otherwise defined, all terms used herein, including technical or scientific terms, have the same meaning as commonly understood by one of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in the present application.

Hereinafter, embodiments will be described in detail with reference to the attached drawings. Regardless of the drawing number, the same or corresponding constituent elements are denoted by the same reference numerals and redundant descriptions thereof will be omitted.

Additionally, in this specification, a camera actuator is described as a device that moves a lens, but includes both concepts in which the device includes or does not include a lens. In the following description, first and second camera actuators are described to include a concept in which each of the first and second camera actuators includes a lens. Additionally, the camera actuator that moves a lens may also be referred to as a 'lens transfer device' or a 'lens driving device.'

Preferred embodiments of the present invention, in which the purpose of the present invention may be specifically realized, will be described below with reference to the attached drawings.

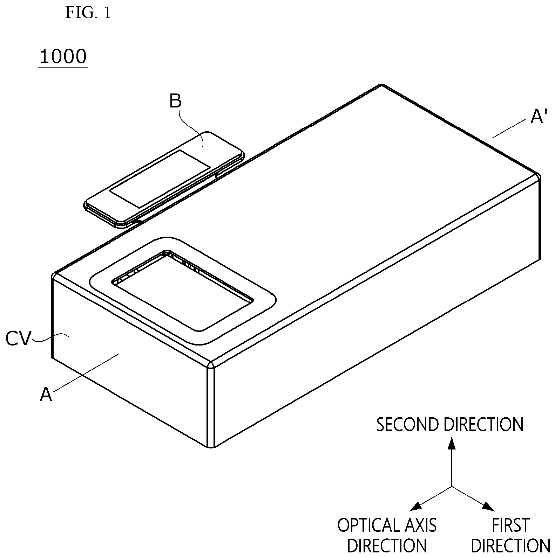

First, before describing a lens assembly according to an embodiment of the present invention, examples and configurations in which the present invention is specifically utilized are generally described with reference to FIGS. 1 to 3.

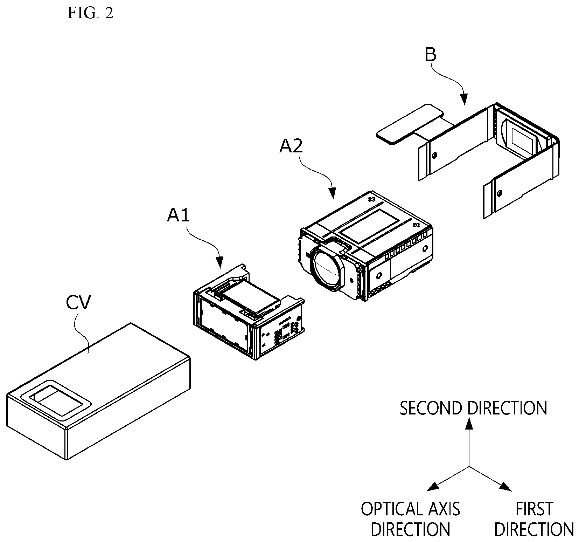

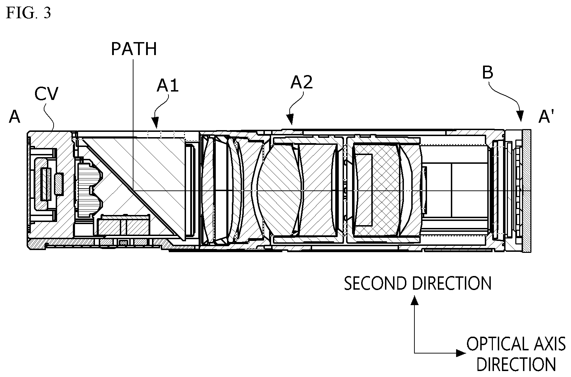

Specifically, FIG. 1 is a view for a general description of a camera actuator according to one embodiment of the present invention, FIG. 2 is an exploded view showing a camera module of the camera actuator according to one embodiment of the present invention, and FIG. 3 is a cross-sectional view along line AA' of the camera module of the camera actuator according to one embodiment of the present invention.

First, referring to FIGS. 1 and 2, a camera module 1000 according to the embodiment may be composed of a cover CV, a first camera actuator A1, a second camera actuator A2, and a circuit board B. Here, the first camera actuator A1 may be used interchangeably with a first actuator and the second camera actuator A2 may be used interchangeably with a second actuator.

The cover CV may cover the first camera actuator A1 and the second camera actuator A2. A coupling force between the first camera actuator A1 and the second camera actuator A2 may be improved by the cover CV.

Furthermore, the cover CV may be made of a material that performs electromagnetic shielding. Thus, the first camera actuator A1 and the second camera actuator A2 in the cover CV may be easily protected.

Further, the first camera actuator A1 may be an optical image stabilization (OIS) actuator. For example, the first camera actuator A1 may move an optical member in a direction perpendicular to an optical axis (axis of incident light).

The first camera actuator A1 may include a fixed focal length lens disposed in a predetermined barrel (not shown). The fixed focal length lens may also be referred to as a "single focal length lens" or a "prime lens."

The first camera actuator A1 may change an optical path. In an embodiment, the first camera actuator A1 may vertically change the optical path through an internal optical member (for example, a prism or a mirror). For example, the optical member may change a direction of light from a second direction to an optical axis direction. With this configuration, a configuration of lenses having sizes greater than a thickness of a mobile terminal may be disposed in the mobile terminal to perform magnification, auto-focus (AF), zoom, and OIS functions, even though the thickness of the mobile terminal is reduced, by changing the optical path.

However, the present invention is not limited thereto and the first camera actuator A1 may change the optical path vertically or at a predetermined angle multiple times.

The second camera actuator A2 may be disposed at a rear end of the first camera actuator A1. The second camera actuator A2 may be coupled to the first camera actuator A1. Further, the first camera actuator A1 and the second camera actuator A2 may be coupled in various ways.

Furthermore, the second camera actuator A2 may be a zoom actuator or an AF actuator. For example, the second camera actuator A2 may support one or a plurality of lenses and move the lenses in response to a control signal from a predetermined control unit to perform an auto-focus function or a zoom function.

Further, one or the plurality of lenses may move independently or individually in the optical axis direction.

The circuit board B may be disposed at a rear end of the second camera actuator A2. The circuit board B may be electrically connected to the second camera actuator A2 and the first camera actuator A1. Moreover, a plurality of circuit boards B may be provided.

The camera module 1000 according to the embodiment may be provided as one or a plurality of camera modules 1000. For example, the plurality of camera modules may include a first camera module and a second camera module.

Further, one camera module 1000 may include one or a plurality of actuators. For example, one camera module 1000 may include the first camera actuator A1 and the second camera actuator A2. Furthermore, the camera module 1000 may be used interchangeably with various terms such as a camera device and an imaging device.

Further, the camera module 1000 may be disposed in a predetermined case (not shown) and include an actuator (not shown) capable of driving a lens unit. This will be described in more detail with reference to the drawings below.

The actuator may be a voice coil motor, a micro actuator, a silicon actuator, or the like and applied in various ways such as capacitive, thermal, bimorph, and electrostatic methods, but is not limited thereto. In addition, in this specification, the camera actuator may be referred to as an actuator or the like. In addition, the camera module 1000 composed of a plurality of camera modules may be installed in various electronic devices, such as mobile terminals. Furthermore, the actuator may be a device for moving or tilting a lens and an optical member. However, in the following description, the actuator is described as a concept in which the actuator includes a lens or an optical member. Furthermore, the actuator may be referred to as a 'lens transfer device,' a 'lens movement device,' an 'optical member transfer device,' an 'optical member movement device,' or the like.

Referring to FIG. 3, the camera module according to the embodiment may include the first camera actuator A1 that performs an OIS function and the second camera actuator A2 that performs zoom and AF functions.

Light may be incident into the camera module 1000 or the first camera actuator A1 through an opening region located in an upper surface of the first camera actuator A1. That is, light may be incident into the first camera actuator A1 in the optical direction, and the optical path may be changed vertically through the optical member. Further, light may pass through the second camera actuator A2 and may be incident on an image sensor IS located at one end of the second camera actuator A2 (PATH).

Furthermore, in this specification, an inner side may be a side in a direction from the cover CV toward the first camera actuator A1, and an outer side may be a side in a direction opposite to that of the inner side. For example, the first camera actuator A1 and the second camera actuator A2 may be located inside the cover CV, and the cover CV may be located outside the first camera actuator A1 or the second camera actuator A2.

The camera module 1000 according to the embodiment may improve the spatial limitations of the first camera actuator A1 and the second camera actuator A2 by changing the optical path. The camera module 1000 according to the embodiment may expand the optical path while minimizing the thickness of the camera module 1000 in response to a change in the optical path. Furthermore, it should be understood that the second camera actuator A2 can also provide a high range of magnification by controlling a focus or the like in the expanded optical path.

Furthermore, the camera module 1000 according to the embodiment may implement OIS through control of the optical path via the first camera actuator A1, thereby minimizing the occurrence of decentering or tilt phenomena and producing the best optical characteristics.

Furthermore, the second camera actuator A2 may include an optical system and a lens driving unit. For example, at least one of a first lens assembly 200, a second lens assembly 300, and a third lens assembly 400 may be disposed in the second camera actuator A2. This will be described in more detail with reference to the drawings below.

Also, the second camera actuator A2 may include a coil and a magnet to perform a high magnification zoom function and an auto-focus function.

For example, although the second lens assembly 300 and the third lens assembly 400 may be moving lenses that move via coils, magnets, and guide pins, and the first lens assembly 200 may be a fixed lens, the present invention is not limited thereto. For example, the first lens assembly 200 may function as a focator that forms an image by focusing light on a specific position, and have a significant change in magnification due to a significant change in a distance to the subject or an image distance depending on the movement of the second lens assembly 300. Further, the second lens assembly 300, which is a variator, may play an important role in the focal length or magnification change of the optical system. Meanwhile, an image point that is formed in the second lens assembly 300, which is a variator, may vary slightly depending on the location thereof. Thus, the third lens assembly 400 may perform a location compensation function for the image formed using the variator. For example, the third lens assembly 400 may function as a compensator, which functions to accurately form the image point formed in the second lens assembly 300, which is a variator, on an actual position of the image sensor.

Further, the second lens assembly 300 and the third lens assembly 400 may be driven using an electromagnetic force due to the interaction of the coil and the magnet. The above description may be applied to the lens assembly described below. Furthermore, the second lens assembly 300 and the third lens assembly 400 may move in the optical axis direction. Further, the second lens assembly 300 and the third lens assembly 400 may move in the optical axis direction independently or dependently.

Furthermore, the first lens assembly 200 may be located at a front end of the second lens assembly 300 or at a rear end of the third lens assembly 400. That is, the first lens assembly 200 may be positioned adjacent to the first camera actuator or adjacent to the image sensor. Further, the first lens assembly 200 may be in a fixed state.

In the present invention, the second lens assembly 300 and the third lens assembly 400 may move in the optical axis direction. Further, the first lens assembly 200 may be located at a front end of the second lens assembly 300 or at a rear end of the third lens assembly 400. Further, the first lens assembly 200 may not move in the optical axis direction. That is, the first lens assembly 200 may be a fixed unit. Furthermore, the second and third lens assemblies may be moving units.

Meanwhile, when an actuator for OIS and an actuator for AF/zoom are disposed according to the embodiment of the present invention, magnetic interference with a magnet for AF/zoom may be prevented when driving the OIS. Since a magnet of the first camera actuator A1 is disposed separately from the second camera actuator A2, magnetic interference between the first camera actuator A1 and the second camera actuator A2 may be prevented. In this specification, OIS may be interchangeably referred to as the terms such as image stabilization, optical image stabilization, optical image correction, and shake correction.

Before describing the lens assembly according to the embodiment of the present invention, the present invention will be described based on the second camera actuator A2, which is only a limited description to help sufficiently understand the invention, and may not necessarily be limited to the illustrated second camera actuator A2.

In addition, although the background as described above, the arrangement relationship in which the components are specifically coupled, and the like are described in the detailed description of the present invention to help sufficiently understand the invention, the present invention is not necessarily limited thereto, and it is intended only to help understand the second camera actuator A2 which will be described in detail through the drawings described below.

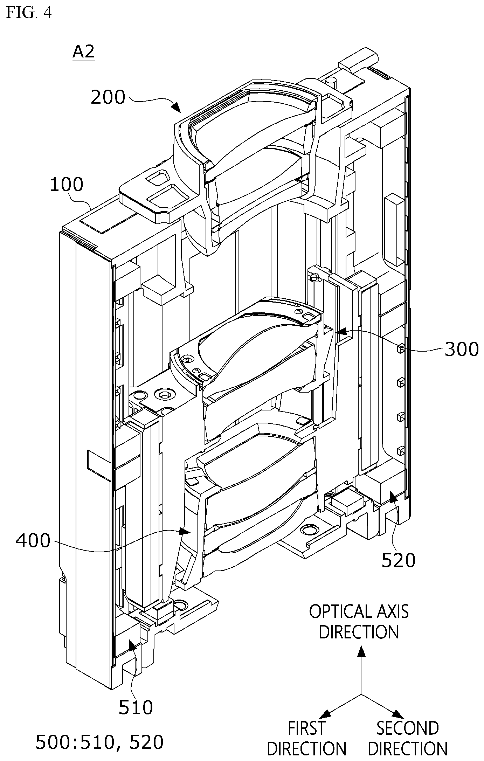

Referring to the background for helping to understand the present invention described above, each configuration of the camera actuator according to the embodiment of the present invention may be described with reference to FIGS. 4 to 9.

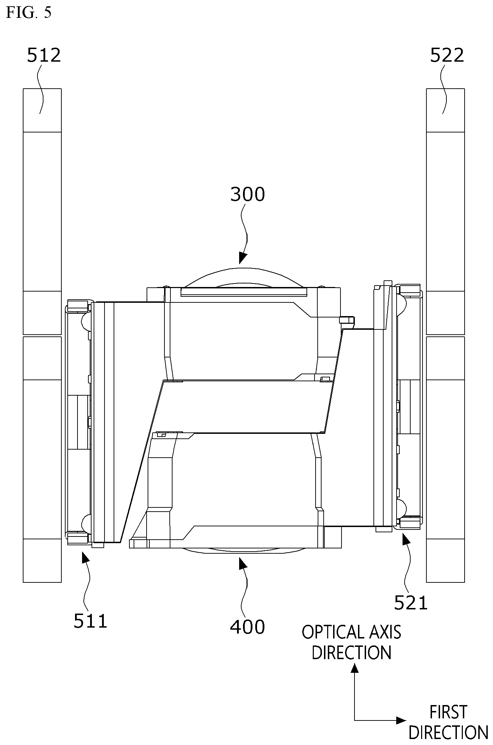

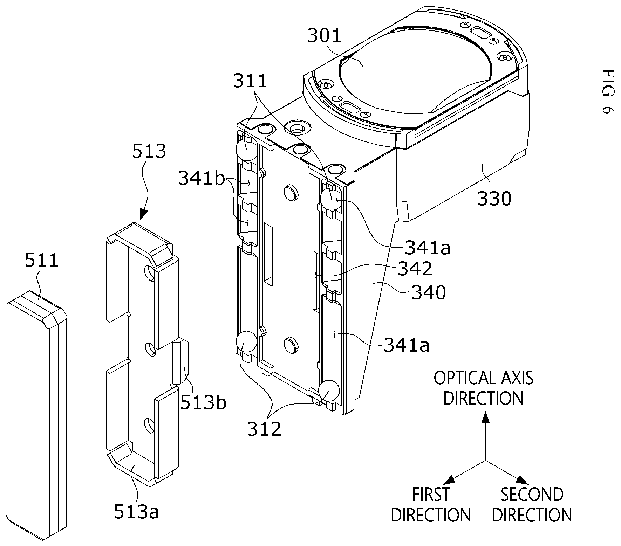

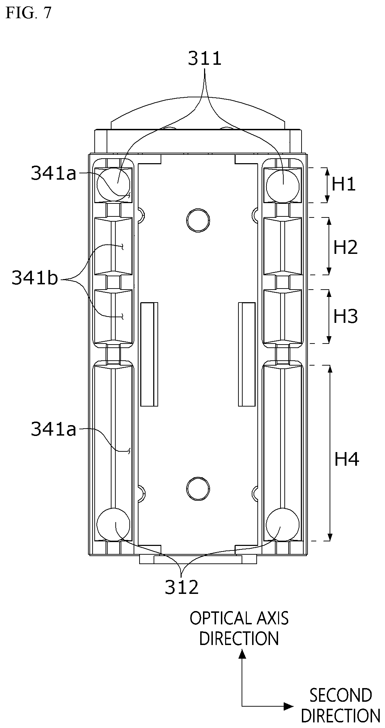

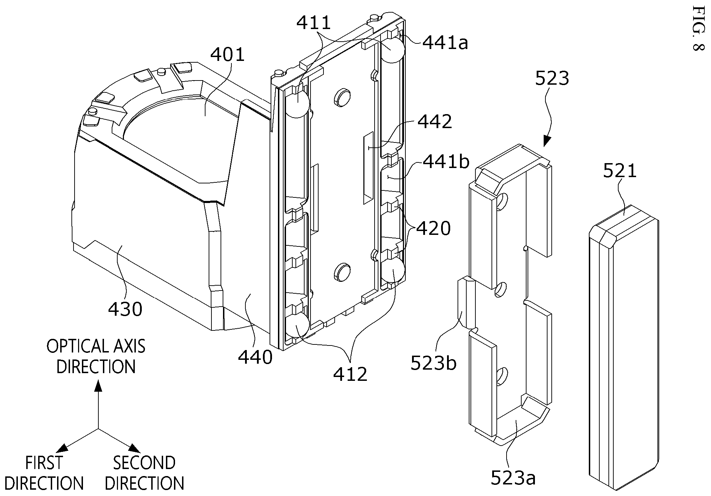

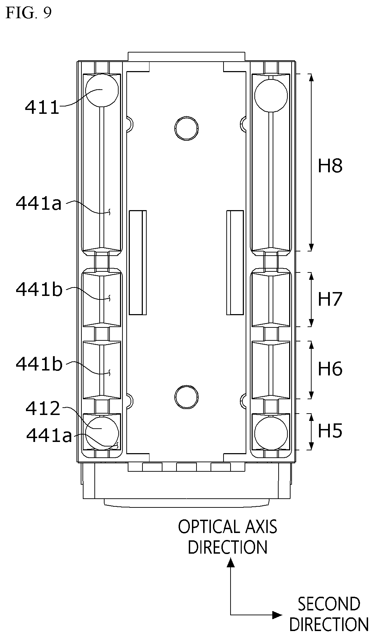

Specifically, FIG. 4 is a view for describing the overall configuration of the camera actuator according to one embodiment of the present invention, FIG. 5 is a view for describing the disposition of the camera actuator according to one embodiment of the present invention, FIG. 6 is a view for describing the second lens assembly of the camera actuator according to one embodiment of the present invention, FIG. 7 is a view for describing a first partition wall portion of the camera actuator according to one embodiment of the present invention, FIG. 8 is a view for describing the third lens assembly of the camera actuator according to one embodiment of the present invention, and FIG. 9 is a view for describing a second partition wall portion of the camera actuator according to one embodiment of the present invention.

First, as shown in FIG. 4, the second camera actuator A2 according to the embodiment of the present invention may include a housing 100, the first lens assembly 200, the second lens assembly 300, the third lens assembly 400, and a driving unit 500 including a first driving portion 510, and a second driving portion 520.

Here, the housing 100 may form the exterior of the camera actuator according to the embodiment of the present invention and have a space formed therein.

In addition, the second lens assembly 300 and the third lens assembly 400 may be located inside the housing 100 and may move in the optical axis direction by the first driving portion 510 and the second driving portion 520, and the first lens assembly 200 may be fixed to the outer side of the housing 100.

At this time, the first lens assembly 200 may be fixed to the outer side of the housing 100, and a separate cover member may be provided between the first lens assembly 200 and the housing 100, but is limited thereto.

Meanwhile, the second lens assembly 300 and the second lens assembly 300 may move in the optical axis direction by the driving unit 500 including the first driving portion 510 and the second driving portion 520.

Here, the first driving portion 510 may include a first magnet 511 provided on the second lens assembly 300 and a first coil 512 provided to face the first magnet 511 in a first direction as shown in FIG. 5.

Accordingly, the second lens assembly 300 may move in the optical axis direction by the electrical interaction between the first magnet 511 and the first coil 512.

Meanwhile, the second driving portion 520 may include a second magnet 521 provided on the third lens assembly 400 and a second coil 522 provided to face the second magnet 521 in the first direction.

Accordingly, the third lens assembly 400 may move in the optical axis direction by the electrical interaction between the second magnet 521 and the second coil 522.

At this time, the optical axis direction may mean a direction of an optical path through which light passes through the first camera actuator A1 and is incident on the second camera actuator A2, and the first direction may mean both a direction that is perpendicular to the optical path and from the first coil 512 toward the second coil 522 and a direction that is perpendicular to the optical path and from the second coil 522 toward the first coil 512.

Additionally, the second direction may mean a direction that is perpendicular to the first direction and perpendicular to the optical axis direction, which is the optical path.

That is, the second direction may mean both a direction from a front surface toward a rear surface and a direction from the rear surface toward the front surface based on the housing 100, and the optical axis direction, the first direction, and the second direction may be perpendicular to each other.

Meanwhile, the second lens assembly 300 and the third lens assembly 400 may be provided between the first coil 512 and the second coil 522 or between the first magnet 511 and the second magnet 521, the first coil 512 and the first magnet 511 may move the second lens assembly 300 in the optical axis direction due to electrical interaction, and the second coil 522 and the second magnet 521 may move the third lens assembly 400 in the optical axis direction due to electrical interaction.

Here, the second lens assembly 300 may include a second lens group 301, a second barrel portion 330, and a second extension portion 340 as shown in FIG. 6.

At this time, the second lens group 301 may mean a group in which a plurality of lenses are arranged in the optical axis direction, and the second barrel portion 330 may be provided in a form that surrounds the second lens group 301.

Additionally, the second extension portion 340 may extend in the first direction away from the second lens group 301 in the second barrel portion 330, but may extend obliquely in a direction away from the first lens assembly 200.

In addition, a first seating portion 513 may be provided between the first magnet 511 and the second extension portion 340, and the first seating portion 513 may include a first wall portion 513a provided in a form that surrounds the first magnet 511 and a first insertion portion 513b that extends in the direction away from the first magnet 511.

In addition, a first rail groove may be formed in the optical axis direction in the second extension portion 340, at least two first partition wall portions 320 may be provided in the first rail groove, and a plurality of compartment spaces may be provided in the first rail groove by the first partition wall portions 320.

In addition, first ball units 311 and 312 may be inserted into some of the plurality of compartment spaces in which the first rail groove is partitioned by the first partition wall portions 320, the first ball units 311 and 312 may be provided as first rolling portions 311 and second rolling portions 312 that are spaced apart from each other in the optical axis direction, and the first rolling portions 311 may overlap the second lens group 301 in the first direction.

Here, any one of the first ball units 311 and 312 may be spaced apart to overlap in the second direction with the first magnet 511 disposed therebetween, and at least two first partition wall portions 320 may be provided between the plurality of first ball units 311 and 312 in the optical axis direction.

In addition, a pair of first rail grooves may be provided and spaced apart from each other in the second direction, the first rolling portions 311 and the second rolling portions 312 may be provided in each of the first rail grooves, and the positions of the first rolling portions 311 may be fixed in the first rail groove by the first partition wall portions 320.

In addition, a first insertion groove 342 for inserting the first insertion portion 513b may be formed between the pair of first rail grooves in the second direction, and the first insertion groove 342 may be concave in the direction from the first coil 512 toward the second coil 522 in a shape corresponding to the first insertion portion 513b.

That is, when looking at the shapes of the second barrel portion 330 and the second extension portion 340, the second barrel portion 330 and the second extension portion 340 may be provided to have a shape that is long in the first direction and a shape that is bent in the optical axis direction at one end, and the first ball units 311 and 312 may be provided in the first rail grooves of the second extension portion 340 which is provided in a form bent in the optical axis direction.

In other words, any one of the first ball units 311 and 312 may be disposed to overlap the second lens group 301 in the first direction, and the first ball units 311 and 312 may be arranged in the optical axis direction.

The effects, functions, and advantages of this will be described in more detail through the drawings below.

Meanwhile, first, the compartment spaces in which the first rail groove is partitioned by the first partition wall portions 320 will be described with reference to FIG. 7 in more detail.

First, as shown in FIG. 7, the first ball units 311 and 312 may be provided only in some of the plurality of compartment spaces in which the first rail groove is partitioned by the first partition wall portions 320, and the first rolling portions 311 and the second rolling portions 312 of the first ball units 311 and 312 may be spaced apart from each other in the optical axis direction.

In addition, the plurality of compartment spaces in which the first rail groove is partitioned by the first partition wall portions 320 may be divided into first spaces 341a in which the first ball units 311 and 312 are disposed and second spaces 341b in which the first ball units 311 and 312 are not disposed, and the first spaces 341a may be disposed spaced apart from each other in the optical axis direction, and specifically, may be provided at both end portions of the first rail groove.

In addition, the second spaces 341b may be provided between the first spaces 341a, and the first ball units 311 and 312, that is, the first rolling portions 311 and the second rolling portions 312, may not be disposed in the second spaces 341b.

Meanwhile, the first spaces 341a and the second spaces 341b may have different lengths, and the first spaces 341a may have different lengths. That is, the plurality of compartment spaces may have different lengths.

When this is specifically described, assuming that a length in the optical axis direction of the first spaces 341a in which the first rolling portions 311 are disposed is a first length H1, a length in the optical axis direction of the first spaces 341a in which the second rolling portions 312 are disposed is a fourth length H4, and lengths of the second spaces 341b in the optical axis direction from the first lens assembly 200 toward the third lens assembly 400 are a second length H2 and a third length H3, the first length H1, the second length H2, the third length H3, and the fourth length H4 may be different from each other.

More specifically, the fourth length H4 among the first length H1 and the fourth length H4 may be greater than the first length H1, the second length H2 and the third length H3 may be the same as or different from each other, and the first length H1 among the first to fourth lengths (H4) H1, H2, H3, and H4 may be the smallest.

Additionally, the first length H1 may have a length that is the same as or similar to a diameter of the first rolling portion 311.

Accordingly, the first rolling portion 311 disposed in any one of the first spaces 341a may be disposed in the first space 341a having the first length H1, the first rolling portion 311 disposed in any one of the first spaces 341a may be disposed in the first space 341a having the fourth length H4, the position of the first rolling portion 311 in the first space 341a having the first length H1 may be fixed, and the second rolling portion 312 in the first space 341a having the fourth length H4 may move in the optical axis direction.

That is, the position of the first rolling portion 311 may be fixed by the first partition wall portion 320 even when the second lens assembly 300 moves in the optical axis direction, the second rolling portion 312 may have a range of movement within the fourth length H4 in the second lens assembly 300, and the position thereof may be changed according to the movement of the second lens assembly 300.

This may allow a load applied to an upper portion of the second lens assembly 300 in which the second lens group 301 is provided to be effectively supported through the first rolling portion 311 as the first rolling portion 311 overlaps the second lens group 301 in the first direction, and a lower side of the second lens assembly 300 in which the second rolling portion 312, which is relatively light because the second lens group 301 is not provided, is provided to minimize the friction caused by the second rolling portion 312.

When this is specifically described, conventionally, during the movement of the second lens assembly 300 in the optical axis direction, the position thereof that needs to be supported inside the first rail groove may not be properly supported, causing a problem in which the second extension portion 340 bends or receives a load. The plurality of first ball units 311 and 312 may be arranged in the optical axis direction to be in contact with each other to prevent this. However, as the plurality of first ball units 311 and 312 are provided, the overall load of the second lens assembly 300 may increase, which may cause a problem in which overcurrent and overload occur.

In addition, as the plurality of first ball units 311 and 312 are disposed to be in contact with each other in the optical axis direction, the positions of the first ball units 311 and 312 may be fixed in the first rail groove. However, there may be a problem in which the above-described overcurrent and overload further increase due to an increase in frictional force generated by providing a relatively large number of first ball units 311 and 312.

However, even in the process in which the first rolling portions 311 overlapping the second lens group 301 in the first direction are disposed in the first spaces 341a having the first length H1 by the first partition wall portions 320 so that the second lens assembly 300 moves in the optical axis direction, the first ball units 311 and 312 according to the embodiment of the present invention may continuously overlap the second lens group 301 in the first direction, thereby preventing the load and bending problems of the second extension portion 340 described above.

In addition, since the first rolling portions 311 and the second rolling portions 312 are disposed in one first rail groove, the above-described problem may be solved with only two configurations. Thus, there may be an advantage in which problems due to overcurrent, overload, and increased friction may be effectively solved.

At this time, among the pair of first spaces 341a, a space having a first length L1, or in other words, a space located on a relatively upper side in the optical axis direction may be provided as a first recess, and a space located on a relatively lower side in the optical axis direction may be provided as a second recess.

Here, the first recess, which is the space located on the relatively upper side in the optical axis direction, may be relatively close to the first lens assembly 200, and the second recess may be relatively farther away from the first lens assembly 200 than the first recess.

At this time, a length of the first recess in the optical axis direction may be the first length L1, a length of the second recess in the optical axis direction may be the fourth length L4, and the second recess may be relatively longer in the optical axis direction than the first recess.

Additionally, as described above, the first ball units 311 and 312 may be disposed in both the first recess and the second recess.

Meanwhile, the third lens assembly 400 may include a third lens group 401, a third barrel portion 430, and a third extension portion 440 as shown in FIG. 8.

At this time, the third lens group 401 may mean a group in which a plurality of lenses are arranged in the optical axis direction, and the third barrel portion 430 may be provided in a form that surrounds the third lens group 401.

Additionally, the third extension portion 440 may extend in the first direction away from the third lens group 401 in the third barrel portion 430 and extend obliquely in a direction of approaching the first lens assembly 200.

In addition, a second seating portion 523 may be provided between the second magnet 521 and the third extension portion 440, and the second seating portion 523 may include a second wall portion 523a provided in a form that surrounds the second magnet 521 and a second insertion portion 523b that extends in a direction away from the second magnet 521 in the first direction.

In addition, a second rail groove may be formed in the optical axis direction in the third extension portion 440, at least two second partition wall portions 420 may be provided in the second rail groove, and a plurality of compartment spaces may be provided in the second rail groove by the second partition wall portions 420.

In addition, second ball units 411 and 412 may be inserted into some of the plurality of compartment spaces in which the second rail groove is partitioned by the second partition wall portions 420, the second ball units 411 and 412 may be provided as third rolling portions 411 and fourth rolling portions 412 that are spaced apart from each other in the optical axis direction, and the fourth rolling portions 412 may overlap the third lens group 401 in the first direction.

Here, any one of the second ball units 411 and 412 may be spaced apart to overlap in the second direction with the second magnet 521 disposed therebetween, and at least two second partition wall portions 420 may be provided between the plurality of second ball units 411 and 412 in the optical axis direction.

In addition, a pair of second rail grooves may be provided and spaced apart from each other in the second direction, the third rolling portions 411 and the fourth rolling portions 412 may provided in each of the second rail grooves, and the position of the fourth rolling portion 412 may be fixed in the second rail groove by the second partition wall portions 420.

In addition, a second insertion groove 442 for inserting the second insertion portion 523b may be formed between the pair of second rail grooves in the second direction, and the second insertion groove 442 may be concave in the direction from the second coil 522 toward the first coil 512 in a shape corresponding to the second insertion portion 523b.

That is, when looking at the shapes of the third barrel portion 430 and the third extension portion 440, the third barrel portion 430 and the third extension portion 440 may be provided to have a shape that is long in the first direction and a shape that is bent in the optical axis direction at one end, and the second ball units 411 and 412 may be provided in the second rail groove of the third extension portion 440 which is provided in a form bent in the optical axis direction.

In other words, any one of the second ball units 411 and 412 may be disposed to overlap the third lens group 401 in the first direction, and the second ball units 411 and 412 may be arranged in the optical axis direction.

The effects, functions and advantages of this will be described in more detail through the drawings below.

Meanwhile, first, the compartment spaces in which the second rail groove is partitioned by the second partition wall portions 420 will be described with reference to FIG. 9 in more detail.

First, as shown in FIG. 9, the second ball units 411 and 412 may be provided only in some of the plurality of compartment spaces in which the second rail groove is partitioned by the second partition wall portions 420, and the third rolling portions 411 and the fourth rolling portions 412 of the second ball units 411 and 412 may be spaced apart from each other in the optical axis direction.

In addition, the plurality of compartment spaces in which the second rail groove is partitioned by the second partition wall portions 420 may be divided into third spaces 441a in which the second ball units 411 and 412 are disposed and fourth spaces 441b in which the second ball units 411 and 412 are not disposed, and the third spaces 441a may be disposed spaced apart from each other in the optical axis direction, and specifically, may be provided at both end portions of the second rail groove.

In addition, the fourth spaces 441b may be provided between the third spaces 441a, and the second ball units 411 and 412, that is, the third rolling portions 411 and the fourth rolling portions 412, may not be disposed in the third spaces 441a.

Meanwhile, the third spaces 441a and the fourth spaces 441b may have different lengths, and the third spaces 441a may have different lengths. That is, the plurality of compartment spaces may have different lengths.

When this is specifically described, assuming that a length in the optical axis direction of the third spaces 441a in which the third rolling portions 411 are disposed is an eighth length H8, a length in the optical axis direction of the third spaces 441a in which the fourth rolling portions 412 are disposed is a fifth length H5, and lengths of the fourth spaces 441b in the optical axis direction from the first lens assembly 200 toward the third lens assembly 400 are a seventh length H7 and a sixth length H6, the fifth length H5, the sixth length H6, the seventh length H7, and the eighth length H8 may be different from each other.

More specifically, the eighth length H8 among the eighth length H8 and the fifth length H5 may be greater than the fifth length H5, the seventh length H7 and the sixth length H6 may be the same as or different from each other, and the fifth length H5 among the fifth to eighth lengths (H8) H5, H6, H7, and H8 may be the smallest.

Additionally, the fifth length H5 may have a length that is the same as or similar to a diameter of the fourth rolling portion 412.

Accordingly, the third rolling portion 411 disposed in any one of the third spaces 441a may be disposed in the third space 441a having the eighth length H8, the fourth rolling portion 412 disposed in any one of the third spaces 441a may be disposed in the third space 441a having the fifth length H5, and the position of the fourth rolling portion 412 in the third space 441a having the fifth length H5 may be fixed, and the third rolling portion 411 in the third space 441a having the eighth length H8 may move in the optical axis direction.

That is, the positions of the fourth rolling portions 412 may be fixed by the second partition wall portions 420 during the movement of the third lens assembly 400 in the optical axis direction, the third rolling portions 411 may have a range of movement within the eighth length H8 in the third lens assembly 400, and the position thereof may be changed according to the movement of the third lens assembly 400.

This may allow a load applied to a lower portion of the third lens assembly 400 in which the third lens group 410 is provided to be effectively supported through the fourth rolling portion 412 as the fourth rolling portions 412 overlap the third lens group 401 in the first direction, and an upper portion of the third lens assembly 400 in which the third rolling portion 411, which is relatively light because the third lens group 401 is not provided, is provided to minimize the friction caused by the third rolling portion 411.

When this is specifically described, conventionally, during the movement of the third lens assembly 400 in the optical axis direction, the position thereof that needs to be supported inside the second rail groove may not be properly supported, thereby causing a problem in which the third extension portion 440 bends or receives a load. The plurality of second ball units 411 and 412 may be arranged in the optical axis direction to be in contact with each other to prevent this. However, as the plurality of second ball units 411 and 412 are provided, the overall load of the third lens assembly 400 may increase, which may cause a problem in which overcurrent and overload occur.

In addition, as the plurality of second ball units 411 and 412 are disposed to be in contact with each other in the optical axis direction, the positions of the second ball units 411 and 412 may be fixed inside the second rail groove. However, there may be a problem in which the above-described overcurrent and overload further increase due to an increase in frictional force generated by a relatively large number of second ball units 411 and 412.

However, even in the process in which the fourth rolling portions 412 overlapping the third lens group 401 in the first direction are disposed in the third spaces 441a having the fifth length H5 by the second partition wall portions 420 so that the third lens assembly 400 moves in the optical axis direction, the second ball units 411 and 412 according to the embodiment of the present invention may continuously overlap the third lens group 401 in the first direction, thereby preventing the load and bending problem of the third extension portion 440 described above.

In addition, since the third rolling portions 411 and the fourth rolling portions 412 are disposed in one second rail groove, the above-described problem may be solved with only two configurations. Thus, there may be an advantage in which problems due to overcurrent, overload, and increased friction may be effectively solved.

That is, when the above contents are summarized, the first rolling portions 311 may continuously overlap the second lens group 301 in the first direction during the movement of the second lens assembly 300, and the fourth rolling portions 412 may continuously overlap the third lens group 401 in the first direction during the movement of the third lens assembly 400.

At this time, among the pair of third spaces 441a, a space having a fifth length L5, or in other words, a space located on a relatively lower side in the optical axis direction may be provided as a third recess, and a space located on a relatively lower side in the optical axis direction may be provided as a fourth recess.

Here, the third recess, which is the space located on a relatively lower side in the optical axis direction, may be relatively far from the first lens assembly 200, and the fourth recess may be relatively closer to the first lens assembly 200 than the third recess.

At this time, a length of the third recess in the optical axis direction is the fifth length L5, a length of the fourth recess in the optical axis direction is an eighth length L8, and the fourth recess may be relatively longer in the optical axis direction than the third recess.

Additionally, as described above, the second ball units 411 and 412 may be disposed in both the third recess and the fourth recess.

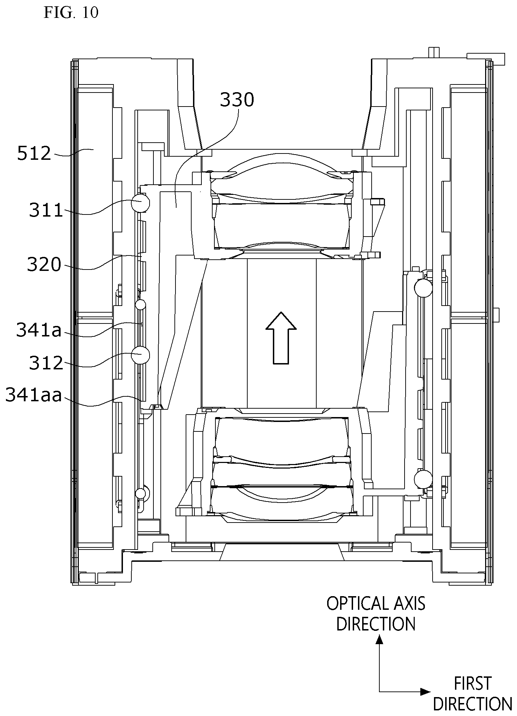

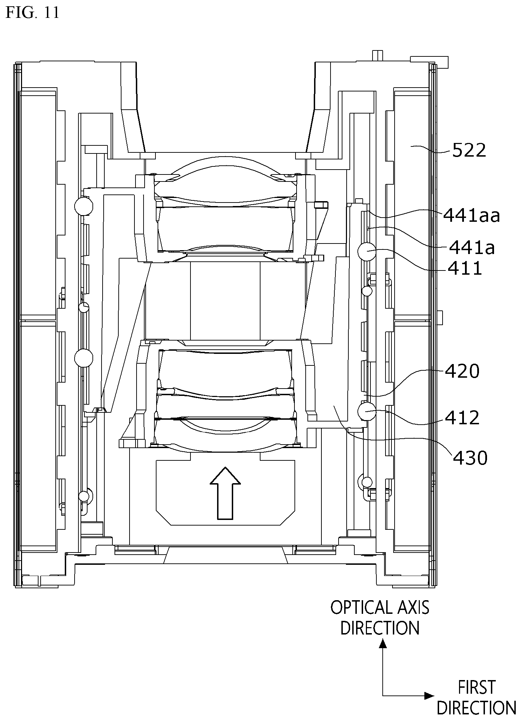

Meanwhile, based on the configuration according to the embodiment of the present invention described above, the features, functions, and utilization may be described in detail with reference to FIGS. 10 and 11.

Specifically, FIG. 10 is a view for describing movement of the second lens assembly of the camera actuator according to one embodiment of the present invention, and FIG. 11 is a view for describing movement of the third lens assembly of the camera actuator according to one embodiment of the present invention.

First, as shown in FIG. 10, when the second lens assembly 300 moves in the optical axis direction due to the electromagnetic interaction between the first coil 512 and the first magnet 511 of the first driving portion 510, the first rolling portions 311 may be fixed in the first spaces 341a having the first length H1 by the first partition wall portions 320, and may continuously overlap the second lens group 301 in the first direction as described above.

Meanwhile, in the case in which the second lens assembly 300 moves upward as shown in FIG. 10, when the bottom surface of the first space 341a having the fourth length H4 is defined as a first bottom surface 341aa for the purpose of describing separately, the second rolling portions 312 may rotate while in contact with the first bottom surface 341aa.

When the second lens assembly 300 moves in a downward direction, which is in a direction opposite to the direction illustrated in FIG. 10, the first rolling portions 311 may be fixed in the first spaces 341a having the first length H1. However, the second rolling portions 312 may be spaced apart from the first bottom surface 341aa within a range of movement of the first spaces 341a having the fourth length H4.

That is, the second rolling portions 312 of the second extension portion 340 of the first spaces 341a having the fourth length H4 that can be relatively partially supported may have the range of movement, and the first rolling portions 311 of the second extension portion 340 of the first spaces 341a having the first length H1 that require relatively partially support by the second lens group 301 may not have a range of movement or may have only a minimal range of movement.

Meanwhile, as shown in FIG. 11, when the third lens assembly 400 moves in the optical axis direction due to the electromagnetic interaction between the second coil 522 and the second magnet 521 of the second driving portion 520, the fourth rolling portions 412 may be fixed in the third spaces 441a having the fifth length H5 by the second partition wall portions 420 and may continuously overlap the third lens group 401 in the first direction as described above.

Meanwhile, in the case in which the third lens assembly 400 moves upward as shown in FIG. 11, when the bottom surface of the third space 441a having the eighth length H8 is defined as a second bottom surface 441aa for the purpose of describing separately, the third rolling portions 411 may rotate while spaced apart from the second bottom surface 441aa.

When the third lens assembly 400 moves in a downward direction, which is in a direction opposite to the direction illustrated in FIG. 11, the fourth rolling portions 412 may be fixed in the third spaces 441a having the fifth length H5. However, the third rolling portions 411 may be spaced apart from or come into contact with the second bottom surface 441aa within a range of movement of the third spaces 441a having the eighth length H8.

That is, the third rolling portions 411 of the third extension portion 440 of the third space 441a having the eighth length H8 that can be relatively partially supported may have the range of movement, and the fourth rolling portions 412 of the third extension portion 440 of the third spaces 441a having the fifth length H5 that require relatively partially support by the third lens group 401 may not have a range of movement or may have only a minimal range of movement.

The preferred embodiments of the invention have been described and it will be clear to those skilled in the art that the invention may be embodied in other specific forms in addition to the embodiments described above without departing from the spirit or the scope thereof.

Therefore, the above-described embodiments should be considered as illustrative rather than restrictive, and accordingly, the present invention is not limited to the above description but may be modified within the scope of the appended claims and the equivalents thereof.

## Claims

1. A camera actuator comprising:
a housing;
a first lens assembly, a second lens assembly, and a third lens assembly that are disposed inside the housing and arranged in an optical axis direction;
a driving unit configured to move the second lens assembly and the third lens assembly in the optical axis direction; and
a plurality of first ball units disposed on the second lens assembly and a plurality of second ball units disposed on the third lens assembly,
wherein the second lens assembly includes a second lens group,
the third lens assembly includes a third lens group,
the plurality of first ball units are disposed in the optical axis direction,
the plurality of second ball units are disposed in the optical axis direction,
the second lens assembly has a first partition wall portion disposed between the plurality of first ball units,
the plurality of first ball units include a first rolling portion and a second rolling portion,
the first rolling portion overlaps the second lens group in a first direction,
the second rolling portion does not overlap the second lens group in the first direction,
the first direction is perpendicular to the optical axis direction, and
a driving distance of the second rolling portion is greater than a driving distance of the first rolling portion.

2. The camera actuator of claim 1, wherein the driving unit includes a first driving portion and a second driving portion, and
the second lens assembly and the third lens assembly are disposed between the first driving portion and the second driving portion.

3. The camera actuator of claim 2, wherein the first driving portion includes a first magnet disposed on the second lens assembly and a first coil facing the first magnet in the first direction, and
the second driving portion includes a second magnet disposed on the third lens assembly and a second coil facing the second magnet in the first direction.

4. The camera actuator of claim 3, wherein any one of the plurality of first ball units is spaced apart to overlap in a second direction with the first magnet disposed therebetween, and
the second direction is a direction perpendicular to the optical axis direction and the first direction.

5. The camera actuator of claim 3, wherein any one of the plurality of second ball units is spaced apart to overlap in the second direction with the second magnet disposed therebetween, and
the second direction is a direction perpendicular to the optical axis direction and the first direction.

6. The camera actuator of claim 5, wherein the second ball units include a third rolling portion and a fourth rolling portion spaced apart in the optical axis direction, and
the fourth rolling portion overlaps the third lens group in the first direction.

7. The camera actuator of claim 1, wherein the third lens assembly has a second partition wall portion disposed between the plurality of second ball units, and
any one of the plurality of second ball units overlaps the third lens group in the first direction.

8. The camera actuator of claim 7, wherein the second lens assembly includes a second barrel portion surrounding the second lens group and a second extension portion extending in the first direction from the second barrel portion, and
the third lens assembly includes a third barrel portion surrounding the third lens group and a third extension portion extending in the first direction from the third barrel portion.

9. The camera actuator of claim 8, wherein the second extension portion extends away from the first lens assembly in the optical axis direction, and
the third extension portion extends to approach the first lens assembly in the optical axis direction.

10. The camera actuator of claim 8, wherein the second extension portion includes a first rail groove, and
the first rail groove is divided into a plurality of compartment spaces in the optical axis direction by the first partition wall portion.

11. The camera actuator of claim 10, wherein the compartment spaces are divided into at least two first spaces in which the first ball unit is disposed and a second space in which the first ball unit is not disposed, and
the plurality of first spaces have different lengths in the optical axis direction.

12. The camera actuator of claim 8, wherein the third extension portion includes a second rail groove, and
the second rail groove is divided into a plurality of compartment spaces in the optical axis direction by the second partition wall portion.

13. The camera actuator of claim 12, wherein the compartment spaces are divided into at least two third spaces in which the second ball unit is disposed and a fourth space in which the second ball unit is not disposed, and
the plurality of third spaces have different lengths in the optical axis direction.

14. The camera actuator of claim 10 or 12, wherein at least one of the compartment spaces has a length in the optical axis direction that is different from the other compartment spaces.

15. A camera actuator comprising:
a housing;
a first lens assembly, a second lens assembly, and a third lens assembly that are disposed inside the housing and arranged in an optical axis direction;
a driving unit configured to move the second lens assembly and the third lens assembly in the optical axis direction; and
a plurality of first ball units disposed on the second lens assembly and a plurality of second ball units disposed on the third lens assembly,
wherein the second lens assembly includes a first recess and a second recess spaced apart in the optical axis direction,
the plurality of first ball units are disposed in both the first recess and the second recess, and
a length of the second recess in the optical axis direction is greater than a length of the first recess in the optical axis direction.
